(19) **Europäisches Patentamt**
**European Patent Office**
**Office européen des brevets**

(11) **EP 1 165 962 B1**

(12) **EUROPÄISCHE PATENTSCHRIFT**

(45) Veröffentlichungstag und Bekanntmachung des Hinweises auf die Patenterteilung:
**10.01.2007 Patentblatt 2007/02**

(51) Int Cl.:
*F02P 7/077* (2006.01)   *F02P 5/15* (2006.01)
*F02P 5/04* (2006.01)

(21) Anmeldenummer: **99960807.8**

(22) Anmeldetag: **22.10.1999**

(86) Internationale Anmeldenummer:
**PCT/DE1999/003390**

(87) Internationale Veröffentlichungsnummer:
**WO 2000/057053 (28.09.2000 Gazette 2000/39)**

(54) **ZÜNDSTEUERVORRICHTUNG UND -VERFAHREN**

IGNITION CONTROL DEVICE AND METHOD

PROCEDE ET DISPOSITIF DE COMMANDE D'ALLUMAGE

(84) Benannte Vertragsstaaten:
**DE FR IT**

(30) Priorität: **22.03.1999 DE 19912770**

(43) Veröffentlichungstag der Anmeldung:
**02.01.2002 Patentblatt 2002/01**

(73) Patentinhaber: **ROBERT BOSCH GMBH**
**70442 Stuttgart (DE)**

(72) Erfinder:
• **HAUSSMANN, Martin**
**D-74343 Sachsenheim (DE)**

• **FRIEDMANN, Harry**
**D-71272 Renningen (DE)**

(56) Entgegenhaltungen:
**US-A- 4 367 530     US-A- 4 594 981**
**US-A- 4 615 318**

• **ADLER URLICH: "Kraftfahr technisches Taschenbuch" 1995 , ROBERT BOSCH GMBH 22. AUFLAGE , STUTTGART XP002135513 Seite 452, Spalte 1 -Seite 454, Spalte 1**

**Beschreibung**

STAND DER TECHNIK

Die vorliegende Erfindung betrifft eine Zündsteuervorrichtung sowie ein entsprechendes Zündsteuerverfahren.

Obwohl auf beliebige Zündsteuerungen anwendbar, werden die vorliegende Erfindung sowie die ihr zugrundeliegende Problematik in bezug auf ein an Bord eines Kraftfahrzeuges befindliches Motorsteuergerät erläutert.

Zündsteuervorrichtungen zum Steuern von Zündereignissen für Zündspulenzündsysteme bzw. -einrichtungen besitzen im wesentlichen zwei Steuerfunktionen, die Steuerung einer gewünschten Zündenergie über die Einschaltdauer bzw. Ladedauer der Zündspule sowie das winkelrichtige Steuern eines Zündimpulses über den Abschaltzeitpunkt bzw. das Ladeende der Zündspule.

Die Zündenergie, die bei Spulenzündanlagen über eine Ladezeit der Zündspule zugemessen wird, ist entsprechend der am elektrischen Schaltkreis der Spule anliegenden Bordnetzspannung sowie der Zeitkonstante des elektrischen Schaltkreises unterschiedlich lang.

Üblicherweise sind die jeweiligen Sollwerte in Abhängigkeit von der Drehzahl und möglichen weiteren Motorparametern als Kennlinienfeld im Steuergerät abgelegt.

Bisherige Zündsteuerverfahren sind üblicherweise für ein spezielles Steuergerät für einen speziellen Motor oder maximal für einen bestimmten Automobilhersteller entworfen.

Ein weiteres Beispiel für eine Zundsteuervorrichtung und Zundsteuerverfahren ist aus dem Kraftfahr technischen Taschenbuch von U. Adler, Robert Bosch GmbH, 22. Auflage, Stuttgart, Seiten 452-454 bekannt.

Soll eine Zündsteuervorrichtungung für eine Steuergeräteplattform entworfen werden, die an einem beliebigen Ottomotor mit den Steuer- und Regelphilosophien beliebiger Kunden eingesetzt werden kann, so ergeben sich neue Anforderungen für das betreffende Zündsteuerverfahren.

Bisheriger Stand der Technik einer Zündausgabe ist ein weitestgehend autarkes Arbeiten der Zündausgabe. Es wird dabei versucht, möglichst viele Informationen parallel und unabhängig in der Zündausgabe zu verarbeiten um ein möglichst hohes Maß an dynamischer Aktualität und an Ausgabegenauigkeit zu erhalten. Üblich ist beispielsweise eine separate Drehzahlerfassung der Zündausgabe, und zwar winkelmäßig möglichst nahe am Zündereignis, um den Fehler in der notwendigen Prognose des Drehwinkelverlaufs in der Dynamik möglichst klein zu halten. Ferner wird versucht, die Zündereignisse möglichst parallel für jeden Zylinder einzeln zu berechnen.

Wird etwa entdeckt, daß aufgrund von Frühverschiebungen des Zündereignisses der Meßort der Winkelgeschwindigkeit ebenfalls verschoben werden muß, so muß diese Verschiebung nur einmal vorgenommen werden und wirkt sich auf die Berechnung der Zündereignisse für die anderen Zylinder nicht aus. Kann eine Motorsteuerung etwa aus Ressourcenknappheit nicht alle Zylinder einzeln rechnen, so wird zumindest eine Gruppenbildung motorisch ähnlicher Zylinder versucht.

Für eine für eine Plattform entworfene Zündung ist dieses Verfahren sehr aufwendig und kostet Hardware-Ressourcen. In ihrem Rechenaufwand reduzierte Zündsteuerungen zeigen, daß dynmische Fehler durch Dynamikvorhalte auf dem Zündwinkel oder der Schließzeit in ausreichendem Maße kompensiert werden können.

Im wesentlichen vermeiden Zündverfahren mit eigenen Berechnungsketten den Applikationsaufwand, verbrauchen aber mehr Hardwareressourcen und bedingen je nach Rechnerarchitektur möglicherweise auch höhrere Laufzeiten. Ein weiterer Punkt, durch den viele der heute gebräuchlichen Zündausgaben charakterisiert sind, besteht darin, daß deren Ausgabesignale meist fest zu bestimmten Hardwareausgängen zugeordnet sind. Ein derartiges Verhalten macht die Projektkonfiguration bei einem Einsatz des Verfahrens in einer Steuerungsplattform umständlich.

Weiterhin prüfen die wenigsten Zündausgabemethoden den Gemischzustand des Zylinders, der gezündet werden soll. Es hat sich bei neueren Motorengenerationen unter Einsatz von Kunststoffsaugrohren verschiedentlich das Problem von Saugrohrexplosionen ergeben. Dieses Problem läßt sich dadurch reduzieren, daß erst definiert befüllte Zlinder gezündet werden.

Bisher fehlt es also an einem Zündverfahren, das mit geringen Hardware/Controllerresourcen möglichst viele Zylinder bedienen kann, das leicht auf eine Zielhardware zu konfigurieren ist und das von der Einspritzung kontrolliert werden kann.

Übliche Steuergeräte verfügen zur Ausgabe von Winkelsignalen über einen Winkelgeberrad, das winkelmäßig äquidistante Impulse an die Zündsteuervorrichtung liefert. Aus Gründen der Rechenlaufzeit kann die Berechnung der Zündereignisse aber in den meisten Zündsteuervorrichtungsarchitekturen nur segmentweise erfolgen, wobei ein Segment das Winkelintervall von 720° der Kurbelwelle geteilt durch die Zylinderzahl ist, also bei einem Vierzylindermotor beispielsweise 180°. Daher können die in der Berechnung ermittelten Winkellagen der Zündereignisse zwar über das Winkelgeberrad und die bei den Zündsteuervorrichtungen üblichen Timer/Counter(Zeitgeber/Zähler)-Schaltungen hinreichend genau ausgemessen werden, die Berechnung selbst geht aber von einer erfaßten Drehzahl aus, die bei einer Drehzahldynamik am Ort der Zündung nicht mehr vorhanden ist.

Wünschenswert ist es also, eine Zündsteuervorrichtung zur Ausgabe von Zündereignissen zu entwerfen, die in einer Motor-Gesamtsteuerung arbeiten kann, die in einer möglichst großen Zahl von Systemumgebungen und unter den verschiedensten Systembedingungen eingesetzt werden kann.

Da aus Gründen der Kostenoptimierung gleichzeitig nur ein begrenzter Rahmen an Steuerungskomponenten zur Verfügung steht (z.B. Interrupt-Kanäle auf einem vordefinierten Controller) sollte die Vorrichtung bzw. das Verfahren mit einem minimalen Aufwand, vor allem an Hardware-Ressourcen, realisierbar sein. Der Aufbau des Zündsteuerverfahrens muß möglichst modular sein, um das Zündsteuerverfahren möglichst einfach für die verschiedenen Steuerungsvarianten anpassen zu können.

VORTEILE DER ERFINDUNG

Das erfindungsgemäße Verfahren zum Betreiben einer Brennkraft machine mit den Merkmalen des Anspruchs 1 und die entsprechende Vorrichtung zum Betreiben einer Brennkraft machine gemäß Anspruch 9 weisen gegenüber den bekannten Lösungsansätzen den Vorteil auf, daß für die Auslegung des Zündsteuerverfahrens gängige Problemstellungen über eine Vielzahl von Motorvarianten analysiert und das Zündverfahren daraufhin entwickelt wurden. Gegenüber gängigen Zündsteuerverfahren ist die entworfene Zündausgabe einfacher konfigurierbar, verbraucht weniger Ressourcen und hat eindeutig definierte Schnittstellen, über die andere Motorsteuerfunktionen mit der Zündausgabe in Interaktion treten können. Insbesondere die mögliche Interaktion mit der Einspritzausgabe erlaubt eine Absicherung des Problems des Saugrohrpatschens bei 0-Drehzahl und des ungleichmäßigen Hochlaufs.

Die der vorliegenden Erfindung zugrundeliegende Idee besteht darin, daß im Gegensatz zu den technisch gängigen Zündausgabeverfahren die beschriebene Zündausgabe mit anderen Einrichtungen zur Ausgabe von Hardwareereignissen interagiert. Besonders günstig wirkt sich hier z.B. die Abfrage des Status der Einspritzung aus. Hierbei liefert die Einspritzung der Zündausgabe die Information, daß eine definierte Kraftstoffbefüllung eines Zylinders stattgefunden hat. Die Zündung wird diesen Zylinder nachfolgend als erstes Zünden.

Bisherige Zündausgaben haben unabhängig vom Gemischzustand bei Erkennen des Beginns eines 360 Grad Intervals oder gleichzeitiger Zylindererkennung mit der Zündung begonnen. Die Zündung fand dabei zu undefinierten Gemischzuständen statt. Wird etwa zu mageres Gemisch gezündet, so kann dies zu verschleppten Verbrennungen und damit im ungünstigsten Fall sogar zur Explosion des Saugrohrs führen. Desweiteren kann bei fettem Gemisch durch starken Wandfilmaufbau im Saugrohr der Motor ungleichmäßig hochlaufen, was sich störend auf das Fahrempfinden, aber etwa auch auf Konzepte zur Einleitung von Abgasreaktionen auswirkt.

Bekannte technische Zündausgabeverfahren sind nicht darauf ausgelegt, verschiedene Ausgabemuster gleichzeitig auszugeben. Meist ist die Information, welche Hardwarekanäle bei einer Zündung aktiviert werden sollen, fest an die Hardware selbst gebunden. Die erfindungsgemäße Zündausgabe ist darauf ausgelegt, ohne Harwareanpassungen und dem damit verbundenen Kostenaufwand in mehreren Steuergerätevarianten zu arbeiten. Form und Aufbau der von der Zündausgabe an die Komponenten übergebenen Signale werden vorzugsweise aus einer Tabelle entnommen, auf die während der Programmlaufzeit der Berechnungsroutinen zugegriffen wird. Projektanpassungen der Software werden damit ebenfalls minimiert.

Im Gegensatz zu den technisch üblichen Systemen wird bei der beschriebenen Zündausgabe keine eigene Auswertung des Gebersignales benötigt. Die Ereignisrechnung findet zu dem in Motorsteuerungen üblicherweise immer vorhandenen allgemeinen Synchron-Prozeß statt. Dadurch daß die Zündausgabe eine allgemeine Vergleichsschaltung der Drehzahlmeßeinrichtung mitbenutzt, die auf Vergleich der Zeit aber auch der Winkelbasis konfiguriert werden kann, wird für Winkelzählung und Inkrementverfeinerung nur eine einzige Aktivierungsleitung für die Berechnungseinheit benötigt. Setzt man die Zündausgabe auf gängigen Controllern ohne paralleler Berechnungseinheiten um (sogenanntes Billigsystem), so sind hier für die gesamte Zündausgabe nur zwei Interrupt-Kanäle vorzusehen. Ein Interrupt für die Bestromung und ein Interrupt für den Bestromungsabbruch, damit können beliebig viele Zylinder bedient werden. Die Zuordnung zu den Zylindern und deren Sondermodi wird über entsprechend komplexe Pufferstrukturen realisiert. Es werden dadurch Controller- bzw. Hardwareressourcen gespart, die von anderen Funktionalitäten genutzt werden können. Die derart aufgebaute Zündausgabe hat zwar die Eigenschaft, dynamisch etwas unaktueller als die meisten gebräuchlichen Verfahren zu sein, allerdings zeigt sich im Versuch, daß die erzielten Ausgabegenauigkeiten den Anforderungen eines Ottomotors genügen.

In den Unteransprüchen finden sich vorteilhafte Weiterbildungen und Verbesserungen des in Anspruch 1 angegebenen Verfahrens zum Betreiben einer Brennkraftmachine bzw. der in Anspruch 9 angegebenen Vorrichtung zum Betreiben einer Brennkraftmachine.

Gemäß einer bevorzugten Weiterbildung ist eine Freigabeeinrichtung zum Freigeben der Zündsteuerwertausgabe, wenn eine Einspritzung stattgefunden hat, vorgesehen.

Gemäß einer weiteren bevorzugten Weiterbildung ist die Zündsteuerwert-Ausgabeeinrichtung derart gestaltet, daß sie die Ladezeit der Zündspuleneinrichtung beginnend ab dem Ladebeginnwinkel durch Anhängen der Ladezeit in einem Ladezeitausgabe-Modus und durch Auszählen eines Ladewinkels bis zum Zündereignis in einem Zündwinkelausgabe-Modus ausgibt.

Gemäß einer weiteren bevorzugten Weiterbildung ist eine Tabelleneinrichtung vorgesehen, die die Informationen enthält, welche beim Zündereigis an die Zündsteuerwert-Ausgabeeinrichtung zu liefert sind.

Gemäß einer weiteren bevorzugten Weiterbildung wird zur Berechnung des Ladebeginnwinkels und Zündwinkels nur ein einziger Winkel/Zeit-Komparator verwendet. Das heißt, es gibt nur zwei Interrupts, nämlich einen für Laden und einen für Zünden, und zwar unabhängig davon, wieviele Zylinder die Brennkraftmaschine besitzt.

Gemäß einer weiteren bevorzugten Weiterbildung erfolgt die Berechung des Ladebeginnwinkels und Zündwinkels im allgemeinen Synchronraster. Es gibt also keinen speziellen Zündungsinterrupt.

Die letzteren beiden Weiterbildungen schaffen ein äußerst vorteilhaftes Timing-Verhalten nach außen.

ZEICHNUNGEN

Ausführungsbeispiele der Erfindung sind in den Zeichnungen dargestellt und in der nachfolgenden Beschreibung näher erläutert.

Es zeigen:

Fig. 1    den prinzipiellen Ablauf der Synchronisation und Zündausgabe bei der Zündsteuervorrichtung gemäß der beschriebenen Ausführungsform;

Fig. 2    einen Ausschnitt aus dem prinzipiellen Ablauf der Synchronisation und Zündausgabe bei der Zündsteuervorrichtung gemäß der beschriebenen Ausführungsform zur Erläuterung einer Zwangszündung;

Fig. 3    eine schematische Darstellung der Impulse eines Winkelgeberrades;

Fig. 4    einen Ausschnitt aus dem prinzipiellen Ablauf der Synchronisation und Zündausgabe bei der Zündsteuervorrichtung gemäß der beschriebenen Ausführungsform zur Erläuterung einer Zeit/Winkel-Beziehung-Vorhersage;

Fig. 5    eine schematische Darstellung der Zündfolge bei einer Vierzylinder-Brennkraftmaschine; und

Fig. 6    eine schematische Darstellung der Zündsteuerungs-Funktionsabläufe im Segment des ersten Zylinders der Vierzylinder-Brennkraftmaschine zur Erläuterung des der vorliegenden Erfindung zugrundeliegenden Prinzips.

BESCHREIBUNG DER AUSFÜHRUNGSBEISPIELE

In den Figuren bezeichnen gleiche Bezugszeichen gleiche oder funktionsgleiche Elemente.

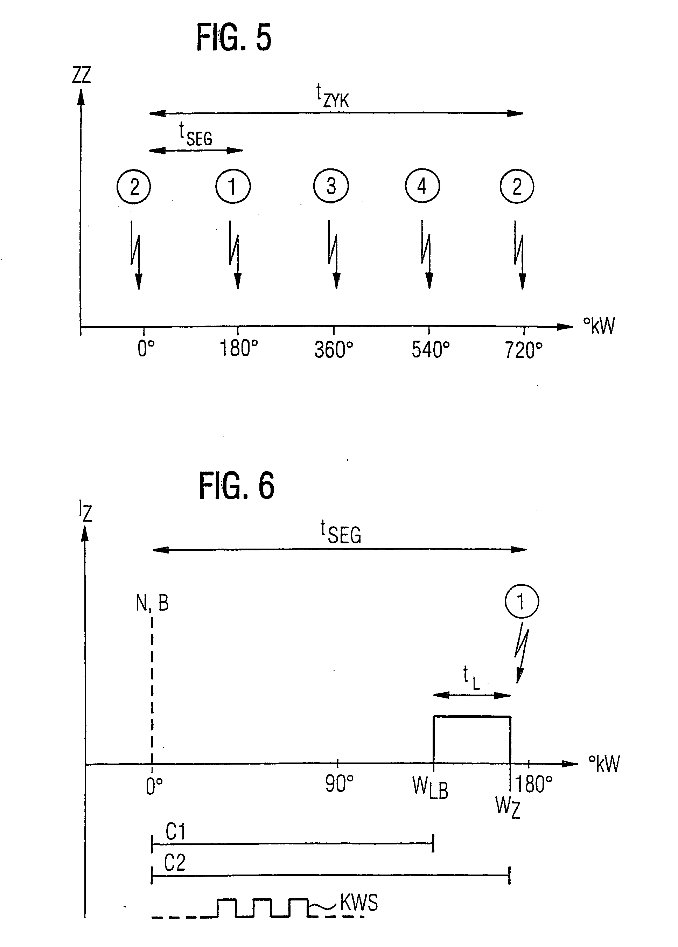

Zur Erläuterung des der vorliegenden Erfindung zugrundeliegenden Prinzips zeigt Fig. 5 eine schematische Darstellung der Zündfolge bei einer Vierzylinder-Brennkraftmaschine.

In Fig. 5 ist auf der x-Achse der Kurbelwinkel KW in ° aufgetragen und auf der y-Achse der Zündverlauf ZZ, welcher die Reihenfolge ...-2-1-3-4-2-... aufweist. Ein vollständiger Zyklus beträgt 720° KW entsprechend einer Zykluszeit $t_{ZYK}$. Ein Segment beträgt 720°KW/4 = 180° entsprechend einer Segmentzeit $t_{SEG}$.

Fig. 6 zeigt eine schematische Darstellung der Zündsteuerungs-Funktionsabläufe im Segment des ersten Zylinders der Vierzylinder-Brennkraftmaschine hinsichtlich der Ansteuerung des Zündspulenstroms $I_Z$.

Bei 0° wird die Drehzahl N erfaßt und unmittelbar danach werden die Ladezeit $t_L$ sowie der Zündwinkel $w_Z$ (näherungsweise gleich dem Schließendwinkel) aus einem Kennlinienfeld B entnommen.

Danach wird der Schließ- bzw. Ladebeginnwinkel $w_{LB}$ aus der Beziehung

$$w_{LB} = w_Z - t_L \cdot \omega$$

unter Annahme einer gleichförmigen Bewegung ermittelt, wobei $\omega$ die der Drehzahl N entsprechende Winkelgeschwindigkeit ist. Aus Gründen der Rechenlaufzeit wird diese zeitliche und winkelmäßige Lage der Zündereignisse nur einmal pro Zündabstand berechnet.

Im Falle eines sogenanten Ladezeitausgabe-Modus wird mit einem Zähler C1 ausgegehend von 0° der Winkel $w_{LB}$ über das Kurbelwellensensorsignal KWS erfaßt und bei Erreichen des Winkels $w_{LB}$ die Endstufe der Zündspule angesteuert. Dann wird die Ladezeitdauer $t_L$ mit einem Zeitgeber gesteuert und nach Verstreichen der Ladezeitdauer $t_L$ die Ansteuerung unterbrochen.

Im Falle eines sogenannten Zündwinkelausgabe-Modus wird mit einem Zähler C1 ausgegehend von 0° der Winkel $w_{LB}$ über das Kurbelwellensensorsignal KWS erfaßt und bei Erreichen des Winkels $w_{LB}$ die Endstufe der Zündspule angesteuert. Mit einem weiteren Zähler C2 wird ausgehend von 0° der Winkel $w_Z$ über das Kurbelwellensensorsignal KWS erfaßt und bei Erreichen des Winkels $w_Z$ die Ansteuerung unterbrochen.

Da die Fehlberechnung des Drehzahlverlaufs z.B. im Falle des Starts des Motors nicht vernachlässigbar ist, wird bei Zündsteuervorrichtungen üblicherweise eine Priorisierung der Steuerziele Ladezeit und Zündwinkel vorgenommen. Entschließt man sich zur exakten Ausgabe der Ladezeit - sog. Ladezeitausgabe-Modus -über die Timer/Counter-Schaltung, so ergibt sich bei der Startbeschleunigung (Drehzahlerhöhung) ein Spätversatz des Zündwinkels. Wird hingegen der Zündwinkel exakt ausgegeben - sog. Zündwinkelausgabe-Modus -, so verkleinert sich bei der Startdynamik die Ladezeit und damit die Energie in der Zündspule, weshalb es zu Aussetzern kommen kann.

Zweckmäßigerweise wird daher die Ausgabemethode, d.h. Ladezeitausgabe oder Zündwinkelausgabe, abhängig von den Eigenschaften des Zielsystems fest vorgegeben, oder aber es findet eine Umschaltung der Ausgabemethode bei einer Grenzdrehzahl statt. Vorteilhaft hierbei ist eine Ladezeitausgabe während des Starts und ein Umschalten auf Zündwinkelausgabe ab einer Grenzdrehzahl, bei der die Drehzahlabtastung derart hochfrequent ist, daß der Dynamikfehler vernachlässigbar wird, ab der andererseits aber auch die Empfindlichkeit des Drehmoments über dem Zündwinkel stark abnimmt.

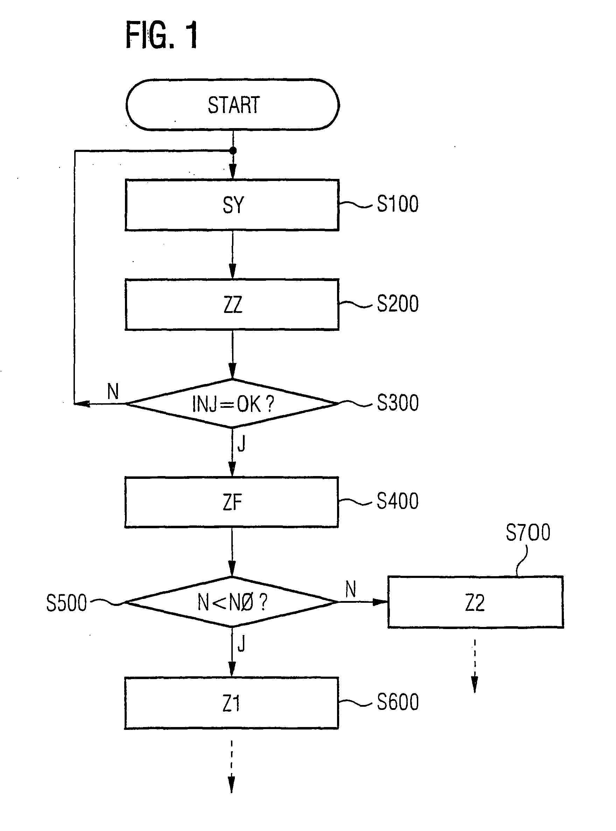

Fig. 1 zeigt den prinzipiellen Ablauf der Synchronisation und Zündausgabe bei der Zündsteuervorrichtung gemäß der beschriebenen Ausführungsform.

Die geschilderte Ausführungsform betrifft insbesondere eine Zündsteuervorrichtung zur Ausgabe von Zündereignissen für Ottomotoren mit einer Drehwinkelmeßeinrichtung bzw. Winkelerfassungseinrichtung. Diese Drehwinkelmeßeinrichtung liefert primär winkelmäßig äquidistante Impulse sowie den Beginn eines Arbeitsspieles bzw. -zyklus (720 °KW bei einem Vierzylindermotor) und den Beginn eines jeweiligen Segments (180 °KW bei einem Vierzylindermotor) an die Zündausgabe.

Die Drehwinkelmeßeinrichtung aktiviert die Berechnungeinheiten der Ausgabeeinrichtgungen einmal pro Zündabstand jeweils zu einem bestimmten Drehwinkel, dem sogenannten Grundwert. Bei der Aktivierung wird den Ausgabeeinrichtungen eine Information über die aktuelle Winkelgeschwindigkeit, sowie die Nummer des durch eine Synchronisierung ermittelten Zylinders übermittelt, der sich gerade auf ZOT (oberer Totpunkt des zu zündenden Zylinders) zubewegt.

Für den Fall, daß die äquidistanten Winkelimpulse, etwa aus Gründen der Synchronisation, eine Lücke aufweisen, wird der Zündausgabe die Lage der Lücke übermittelt. Die Zündausgabe rechnet daraufhin die Lückeninformation in die aus zugabende Winkellage der Ausgabeereignisse mit ein.

Die Drehwinkelmeßeinrichtung liefert zum Grundwert eine Referenzzeit und die Nummer des Winkelpulses. Die Drehwinkelmeßeinrichtung zählt die Winkelpulse und verfügt gleichzeitig über eine freilaufende Uhr (Zeitimpulse), deren Zeitwerte für jeden Winkelpuls abgespeichert werden. Über eine Vergleichseinheit können Winkelimpulsnummern und Uhrzeiten verglichen werden. Sind Vergleichswinkelstand oder Vergleichsuhrzeit gleich dem Stand dem Impulszählerwert oder der Uhrzeit so löst die Vergleicheinheit eine Berechnung der Zündausgabe aus.

Sind die Zylinderzuordnung und der Beginn des Drehintervalls gefunden, so wird die Zündausgabe periodisch in einem konstanten Winkelabstand von der Drehwinkelmeßeinrichtung aktiviert. Der Winkelabstand ergibt sich aus dem Drehwinkel für ein komplettes Arbeitsspiel der Maschine dividiert durch die gesamte Anzahl der Zylinder. Dieser Winkelabstand sei im folgenden Zündintervall bzw. -segment genannt. Die Zündausgabe erhält dabei zusätzlich die Winkellage der Software-Bezugsmarke, im folgenden Grundwert genannt. Der Grundwert sollte günstigerweise in Grad vor dem OT des Arbeitszylinders angegeben werden. Der Grundwert sei daher im folgenden als Winkellage der Softwarebezugsmarke bezüglich OT betrachtet.

Wie in Fig. 1 gezeigt, wird bei Schritt S100 eine Synchronisation SY der Zündsteuerung mit dem Kurbelwinkelverlauf anhand des Impulsmusters der Drehwinkelmeßeinrichtung durchgeführt. In Schritt S200 wird eine Zylinderzuordnung ZZ des sich auf OT zubewegenden Zylinders getroffen. Die Drehwinkelmeßeinrichtung übermittelt der Zündausgabe die Information, daß eine Zylinderzuordnung stattgefunden hat. Das heißt der Beginn eines 360° Drehwinkelintervalls und die Nummer des Zylinders, der sich zu Beginn des Intervalls im Kompressionstakt befindet wurde gefunden. Erst wenn diese Information übermittelt wurde, beginnt der Synchronisationsteil der Zündausgabe mit weiteren Prüfungen.

Die Zündung wird erst dann bei Schritt S400 freigeschaltet (ZF), wenn eine eindeutige Zylindererkennung stattgefunden hat und der Zylinder der aktuellen Synchronisierung definiert befüllt wurde, d.h. INJ = OK bei Schritt S300 bestätigt wird. Damit ein definiertes Hochlaufen der Maschine stattfindet und eventuell verschleppten Verbrennungen vorgebeugt wird, wartet die Zündausgabe mit dem Beginn weiterer Berechnungen solange, bis die Einrichtung zur Ausgabe von Einspritzsignalen der Zündausgabe eine definierte Einspritzung signalisiert. Würde eine Zündung zu undefinierten Gemischzuständen abgesetzt, so wurde der Motor kurzzeitig mit einem eventuellen Restwandfilm hochlaufen können und anschließend wieder bei Abbau des Wandfilms in der Drehzahl einbrechen bevor ein definierter Hochlauf erfolgt. Neben dem definierten Hochlauf wird durch das Freischalten der Zündung bei erfolgreicher Einspritzung die Wahrscheinlichkeit von Saugrohrpatschern reduziert. Ist die Zündung einmal freigeschaltet, so bleibt die Zündung für den Rest des Fahrzyklus aktiv, solange die Drehwinkelmeßeinrichtung keinen Verlust der Synchronisation zwischen Drehwinkelsignal und den Signalverarbeitungsmethoden feststellt.

Wie bei Schritt S500, S600 und S700 gezeigt, wird unter einer fest einstellbaren Grenzdrehzahl N0 der Zündbereich Z1 aktiv. Hier wird von der Zündauagabe ein exaktes Einhalten der Schließzeit garantiert, also der Ladezeitausgabe-Modus. Oberhalb der Grenzdrehzahl N0 wird Zündbereich Z2 aktiviert, hier wird exakte Zündwinkelausgabe garantiert, also der Zündwinkelausgabe-Modus.

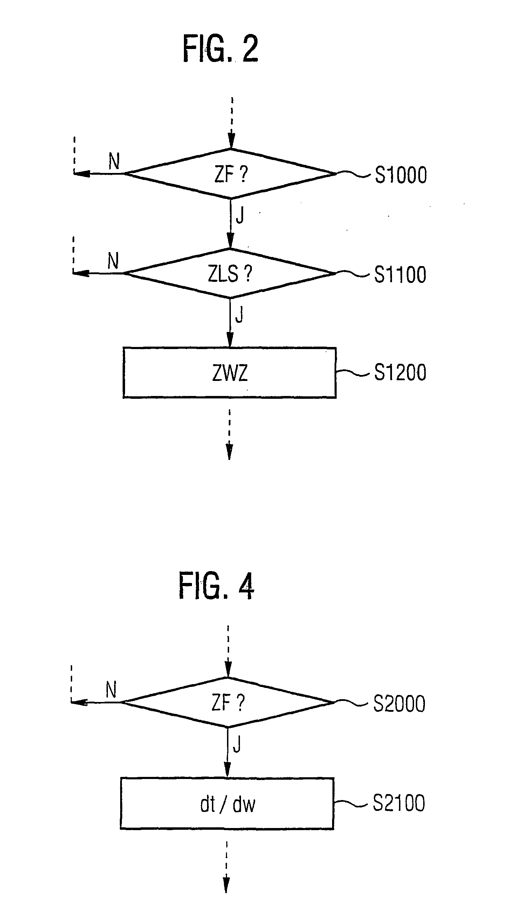

Fig. 2 zeigt einen Ausschnitt aus dem prinzipiellen Ablauf der Synchronisation und Zündausgabe bei der Zündsteuervorrichtung gemäß der beschriebenen Ausführungsform zur Erläuterung einer Zwangszündung.

Gemäß den beschriebenen Mechanismen aktiviert die Drehwinkelmeßeinrichtung die Zündausgabe für jeden sich im Verdichtungstakt befindlichen Zylinder. Die Zylinderposition liegt bei Aktivierung der Zündausgabe um den Winkel des Grundwertes vor OT. Innerhalb des Zündintervalls bis zum nächsten Aufruf der Zündausgabe muß ein Zündimpuls ausgegeben werden. Ist beim nächsten Aufruf der Zündausgabe die letzte Zündung noch nicht ausgelöst, so ist der Zündimpuls unplausibel spät. Dieses Verhalten kann nur durch einen Fehler im System entstanden sein und, um eine Beschädigung der Zündkomponenten zu verhindern, wird eine Zwangszündung eingeleitet.

Insbesondere wird bei Schritt S1000 die Zündfreigabe überprüft. Wird dann bei Schritt S1100 festgestellt, daß das Zündsignal vom letzten Segment ZLS noch nicht abgesetzt wurde, erfolgt bei Schritt S1200 die Zwangszündung ZWZ.

Tritt zum Beispiel durch Fehler, etwa EMV-Einstrahlung, ein Fehlverhalten der Zündausgabe ein, der zu unplausibel späten Zündwinkeln führt, so würde der Fehler durch einen Neuaufruf der Zündausgabe durch die Drehwinkelmeßeinrichtung verringert, da zu Beginn der Zündausgabe die in Fig. 2 dargestellte Plausibilisierung durchgeführt wird.

Die Zündausgabe bekommt, wie gesagt, von der Drehwinkelmeßeinrichtung die Nummer des sich auf den Zündungs-OT zu bewegenden Zylinders übergeben. Aus der Zylinderzahl wird eine Adressnummer innerhalb einer Tabelle ermittelt, die die Information enthält, die bei Eintreffen des Zündereignisses an die Ausgabeeinheit der Zündausgabe übertragen wird. Die Adressnummer ergibt sich aus der Zylindernummer, der Zündkreisanzahl sowie dem ausgewählten Ausgabemodus. Die Zylindernummer wird der Zündausgabe von der Drehwinkelmeßeinrichtung übergeben. Die Zündkreisanzahl wird fest in die Ablaufsteuerung der Zündausgabe eingestellt, der Ausgabemodus ergibt sich aus der Berechnung der Zündereignisse oder wird von anderen Einrichtungen der Motorsteuerung der Zündausgabe übergeben. Nachstehend ist schematisch die Form einer solchen Tabelle dargestellt.

Tabelle I: Zündmaske bei Vierzylindermotor

| Zylindernummer | Konventionelle Ausgabe der Zündung | Notlauf | Energie laden | Sonstige Modi |
|---|---|---|---|---|
| 1 | Adresse1: Maske1 | Adresse5: Maske5 | Adresse9: Maske9 | Adresse13: Maske13 |
| 2 | Adresse2: Maske2 | Adresse6: Maske6 | Adresse10: Maske10 | Adresse14: Maske14 |
| 3 | Adresse3: Maske3 | Adresse7: Maske7 | Adresse11: Maske11 | Adresse15: Maske15 |
| 4 | Adresse4: Maske 4 | Adresse8: Maske8 | Adresse12: Maske12 | Adresse16: Maske16 |

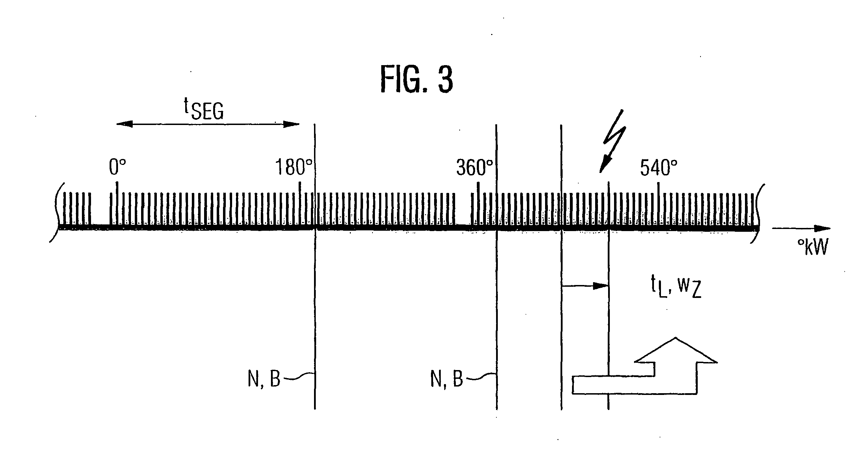

In der Zündausgabe müssen zeitliche Ereignisse und Winkelereignisse miteinander synchronisiert werden. Fig. 3 zeigt eine Grobskizze des Timings eines einzelnen Funkens anhand des Signals der Drehwinkelmeßeinrichtung.

Es ist zu erkennen, daß in einem Winkelabstand nach Messung der Segmentzeit TSEG, also der Zeit für einen Zündabstand, begonnen wird, Energie in das Zündsystem einzubringen. Dieser Winkelabstand sei im folgenden Schließbeginnwinkel genannt. Die Energie wird in der hier diskutierten Zündausgabe über eine Zeitspanne, die sogenannte Schließzeit definiert. Nach Ablauf der Schließzeit wird die in das System eingebrachte Energie in einen Zündfunken umgesetzt.

Für die Zündausgabe gelten zwei Soll-Werte $t_L$, $w_z$ die aufeinander abgestimmt werden müssen. Zum einen wird der Zündausgabe der Soll-Wert Schließzeit bzw. Ladezeit also Energiezumessungdauer übergeben (Zeitkriterium), zum anderen erhält die Zündausgabe den Soll-Wert Zündwinkel (Winkelkriterium). Die Zündausgabe muß also berechnen, zu welcher Winkellage vor dem Zündwinkel begonnen werden muß, Energie in das Zündsystem einzubringen, damit die Zündenergie ausreichend ist.

Hierzu muß bei der Berechnung der Zündereignisse ein Winkel/Zeit-Verlauf prognostiziert werden. Die hier diskutierte Zündausgabe geht für den Bewegungsverlauf während eines Zündabstandes von einer gleichförmigen, also nicht beschleunigten, Bewegung aus. Für den Schließbeginnwinkel Wb ergibt sich dann:

$$Wb = Wout - (szout/tseg) * Segmentwinkel$$

wobei gilt:

Wout: Soll-Zündwinkel bezüglich der Winkellage der Zündereignisrechnung

szout: Soll-Schließzeit

tseg: voraussichtliche Dauer des aktuellen Segments (diese Information wird von der Drehwinkelmeßeinrichtung der Zündausgabe übergeben)

Sobald die Zündausgabe aufgerufen und die Synchronisations- und Freigabekriterien gültig sind, berechnet sich die Zündausgabe die Zeit für ein Winkelinkrement aus der prognostizierten Segmentzeit der als Integer-Wert beschriebenen Winkelwerte, die in der Zündausgabe verarbeitet werden, wie in Fig. 4 illustriert.

Wie bereits dargestellt, hat die Zündausgabe die Aufgabe, einerseits eine Energiezumeßzeit zu steuern, und andererseits muß das Ende der Zumeßzeit zu dem über den Zündwinkel definierten Winkelort erreicht sein. Das heißt die Zündausgabe mißt sowohl Winkel als auch Zeitintervalle für die Zündereignisse der Zylinder des Ottomotors aus.

In allen Ausgabemodi der Zündausgabe wird zunächst der oben beschriebene Schließbeginnwinkel ausgemessen und dort das Signal zur Energiezumessung von der Energiestelleinrichtung der Zündausgabe ausgegeben.

Wie beschrieben, wird die Berechnungslogik zu Beginn eines Zündintervalls von einem allgemeinen Freigabesignal der Drehwinkelmeßeinrichtung aktiviert. Das Freigabesignal aktiviert dabei gleichzeitig sämtliche andere Berechnungseinheiten der Motorsteuerung, die mit der Zündausgabe interagieren müssen. Zu Beginn der Berechnungen erhält die Zündausgabe von der Drehwinkelmeßeinrichtung die neueste Drehzahlinformation, die über ein definiertes Meßwinkelintervall ermittelt wurde.

Die Drehzahlinformation wird von der Zündausgabe unmittelbar dazu benutzt gemäß obiger Gleichung aus dem von anderen Recheneinheiten übermittelten Soll-Größen Schließzeit und Zündwinkel den Schließbeginnwinkel zu ermitteln. Der Schließbeginnwinkel ergibt sich als Winkelabstand des Beginns der Energiezumessung zur Lage der Ereignisberechnung. Dieser Winkel wird umgerechnet in eine, dem Schließbeginnwinkel entsprechende Anzahl von Winkelgeberimpulsen. Der Winkelrest, der nicht über die Winkelimpulse ausgemessen werden kann, wird in einen Pufferspeicher der Ausgabeeinheit der Zündausgabe geschrieben. Die Impulsanzahl wird an eine Schalteinheit der Zündausgabe übermittelt, die automatisch die Impulsanzahl mit einem Zahnimpulszähler der Winkelmeßeinrichtung vergleicht. Ist der Zahnimpulszähler gleich der Impulsanzahl, so wird die Berechnungseinheit der Zündausgabe erneut aktiviert, diesmal jedoch von der internen Schalteinheit und nicht vom der Drehwinkelmeßeinrichtung. Bei der erneuten Berechnung wird der in einem internen Puffer abgelegte Winkelrest auf die Zeit für die letzte Zahnperiode des Winkelgebers bezogen. Dieser Wert wird bei der Drehwinkelmeßeinrichtung abgefragt. Aus dem Winkelrest und der letzten Zahnperiode ergibt sich eine Zeitspanne bis zum tatsächlichen Winkelort des Schließbeginns, hierfür wird eine bestimmte Winkel/Zeit-Bewegungsform der Maschine unterstellt. Die Zeitspanne wird wiederum an die interne Vergleichs-Schaltung weitergegeben. Die Schaltung wird diesmal über einen Schalter mit dem freilaufenden Timer der Winkelmeßeinrichtung verbunden.

Es findet derselbe Mechanismus wie beim Zahnvergleich diesmal auf der Zeitebene statt. Erreicht der Timer der Zeitvergleichswert so löst die interne Schaltung wiederum eine Berechnung der Zündausgabe aus. Diese greift dann auf die oben beschriebene Masken-Tabelle zu und übergibt den zu den Arbeitsparametern passenden Tabellenwert an die Energiestalleinheit der Zündausgabe. Der Energieeintrag ins System findet statt.

Die Annahme konstanter Winkelgeschwindigkeit führt dazu, daß wenn unter Einfluß von Beschleunigung nach dem Schließbeginnwinkel exakt die Schließzeit ausgegeben wird der tatsächliche Zündwinkel gegenüber dem Soll-Wert des Zündwinkels nach spät verschoben wird.

Bricht man die Schließzeit exakt am Ort des Zündwinkels ab, so würde die Soll-Schließzeit nicht eingehalten werden können. Es ergeben sich zwei prinzipielle Ausgabeverfahren der Zündausgabe, die beide von der diskutierten Zündausgabe unterstützt werden, die exakte Ausgabe der Schließzeit oder die exakte Ausgabe des Zündwinkels.

Die exakte Ausgabe der Schließzeit sei im folgenden Zündbereich 1 genannt, und die exakte Ausgabe des Zündwinkels sei im folgenden Zündbereich 2 genannt.

Der größte Dynamikfehler wird beim Start der Maschine gemacht. Hier ist die Drehzahlaktualisierung am geringsten und die Beschleunigung am größten. Da die Winkellage des Verbrennungsschwerpunktes, der letztendlich durch den Zündwinkel gesteuert werden soll in dieser Phase ohnehin einer Toleranz von größer 20% unterworfen ist und andererseits der Energiebedarf der Zündanlage vor allem bei Kaltstarts am größten arbeitet die Zündausgabe bei niederen Drehzahlen in Zündbereich Z1. Dadurch wird ein Einhalten der Soll-Energie, vorausgesetzt alle am Energieumsatz beteiligten Einrichtungen arbeiten spezifikationsgemäß, gewährleistet. Die Umschaltung in den Zündbereich Z2 wird über eine Konstante parametriert. Dadurch ist es möglich die Zündausgabe ausschließlich in einem der beiden Modi arbeiten zu lassen.

In Zündbereich Z2 wird der Zündwinkel wie der Schließbeginnwinkel durch das Auszählen von Winkelimpulsen angesteuert. Die Schließzeit wird dabei so gut eingehalten wie der Wlnkel/Zeit-Verlauf der Maschine bei der Ereignisberechnung bei Aufruf der Zündausgabe durch die Drehwinkelmeßeinrichtung prognostiziert wurde.

In Zündbereich Z1 wird nach Erreichen des Schließbeginnwinkels nicht nur der Tabellenwert der Energiestelleinrichtung übergeben. Am Ort des Schließbeginns wird welterhin die Schalteinheit zum Vergleich des Zahnzählers und des Timers der Winkelmeßeinrichtung auf Timerbergleich umgeschaltet und mit der Schließzeit als Timervergleichswert geladen. Dadurch wird die Schließzeit über dem hochauflösenden Timer der Winkelmeßeinrichtung genau eingehalten. Auch hier ergibt sich der Dynamikfehler, diesmal in der Lage des Zündwinkels, aus der Güte der Prognose des Wlnkel/Zeit-Verlaufs der Drehbewegung.

Die Zündereignisse Energie laden und Zünden werden lediglich über zwei Interrupts angesteuert, das heißt es werden speziell für die Zündung lediglich zwei Leitungen/Kanäle von einer Vergleichseinheit der Drehwinkelmeßeinrichtung benötigt.

Die Vergleichseinheit löst bei Übereinstimung mit einem Winkelimpulswert die Berechnung der Inkrementverfeinerung aus und wird automatisch auf Timervergleich umgeschaltet mit dem der Restwinkelausgezählt wird. Die Vergleichseinheit zählt dabei entweder den Schließbeginnwinkel und den Zündwlnkel parallel aus, oder es wird nach dem Schließbeginnwinkel das Zündsignal durch einen Timervergleich ausgelöst, das heißt die Vergleichseinheit wird erst gar nicht in den Winkelzahlmodus geschaltet. Es ist also von der Vergleichseinheit lediglich ein Kanal für die Zündung und ein Kanal für den Ladebeginn vorzusehen.

Üblich im Stand der Technik sind hier mehrere Kanäle für verschiedene Zylinder.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere ist die Erfindung nicht auf eine Vierzylinder-Brennkraftmaschine beschränkt, sondern beliebig verallgemeinerbar.

Auch können abgesehen vom Einspritzkriterium weitere Zündfreigabekriterien eingebaut werden.

## Patentansprüche

1. Verfahren zum Betreiben einer Brennkraftmaschine wobei:

   a) ein Winkelgeberrad synchron zur Bewegung der Kurbelwelle Winkelimpulse erzeugt,

   b) eine Zündausgabeeinheit in jedem Segment eines Brennkraftmaschinenzyklus' mindestens einen Schließbeginnwinkel ($w_{LB}$) berechnet, wobei der Schließbeginnwinkel ($w_{LB}$) als Summe einer Anzahl von Winkelimpulsen und einem Winkelrest ermittelt wird,

   c) das Erreichen der jeweiligen Anzahl von Winkelimpulsen mittels einer Vergleichseinheit festgestellt wird und daran anschließend die für den Winkelrest benötigte Zeit unter Berücksichtigung der aktuellen Drehzahl ermittelt wird und nach einem sich daran anschließenden Ablauf der fur den Winkelrest benötigten Zeit der Beginn der Ladezeit der Zündspule ausgelöst wird.

2. Verfahren nach Anspruch 1, **dadurch gekennzeichnet, dass** die Zündausgabeeinheit neben dem Schließbeginnwinkel mindestens eine weitere, den Zundwinkel bestimmende Größe ($t_L$, $w_Z$) berechnet.

3. Verfahren nach Anspruch 2, **dadurch gekennzeichnet, dass** die Zundausgabeeinheit in einem zweiten Modus als weitere, den Zündwinkel bestimmende Größe den Zündwinkel ($w_Z$) berechnet, wobei mittels der ersten Mittel der Zundausgabeeinheit der Zundwinkel ($w_Z$) als Summe einer Anzahl von Winkelimpulsen und einem Winkelrest berechnet wird, das Erreichen der jeweiligen Anzahl von Winkelimpulsen mittels einer Vergleichseinheit festgestellt wird und daran anschließend die für den Winkelrest benötigte Zeit unter Berücksichtigung der aktuellen Drehzahl ermittelt wird und nach einem sich daran anschließenden Ablauf der für den Winkelrest benötigten Zeit das Ende der Ladezeit der Zündspule ausgelost wird.

4. Verfahren nach Anspruch 2, **dadurch gekennzeichnet, dass** die Zundausgabeeinheit in einem ersten Modus als weitere, den Zundwinkel bestimmende Größe die Schließzeit ($t_L$) berechnet, wobei mittels der Vergleichseinheit nach Ablauf der Schließzeit ($t_L$) das Ende der Ladezeit der Zundspule ausgelöst wird.

5. Verfahren nach Anspruch 3 und 4, **dadurch gekennzeichnet, dass** die Zündausgabeeinheit abhängig von einem Betriebsparameter wie Drehzahl oder Zeit nach dem Start der Brennkraftmaschine zwischen dem ersten und dem zweiten Modus hin- und herschaltet.

**6.** Verfahren nach einem der Ansprüche 1, 3 oder 4, **dadurch gekennzeichnet, dass** mittels zweiter Mittel der Zundausgabeeinheit der Winkelrest oder die Schließzeit als Anzahl von Taktimpulsen eines unabhängigen Taktgebers ausgedrückt wird, wobei der unabhängige Taktgeber unabhängig von der Bewegung der Kurbelwelle arbeitet, wobei die Taktimpulse des Taktgebers an die Vergleichseinheit weitergeleitet werden.

**7.** Verfahren nach einem der Ansprüche 3 oder 4, **dadurch gekennzeichnet, dass** ein Signal, dass von der Vergleichseinheit zum Beginn der Ladezeit der Zündspule erzeugt wird, über eine erste Leitung an die Ausgabeeinheit gegeben wird, und ein Signal, dass von der Vergleichseinheit zum Ende der Ladezeit der Zundspule erzeugt wird, über eine zweite Leitung an die Zündausgabeeinheit gegeben wird, wobei die erste Leitung und die zweite Leitung jeweils die Vergleichseinheit und die Zündausgabeeinheit verbinden.

**8.** Verfahren nach Anspruch 1, **dadurch gekennzeichnet, dass** die Berechnung des Schließbeginnwinkel ($w_{LB}$) erst dann freigegeben wird, wenn eine Einspritzung erfolgt ist.

**9.** Vorrichtung zum Betreiben einer Brennkraftmaschine mit:

d) einem Winkelgeberrad, das synchron zur Bewegung der Kurbelwelle Winkelimpulse erzeugt,
e) einer Zündausgabeeinheit, die in jedem Segment eines Brennkraftmaschinenzyklus' mindestens einen Schließbeginnwinkel ($w_{LB}$) berechnet, wobei erste Mittel der Zundausgabeeinheit vorgesehen sind, die den Schließbeginnwinkel ($w_{LB}$) als Summe einer Anzahl von Winkelimpulsen und einem Winkelrest ermitteln,
f) einer Vergleichseinheit, mittels der das Erreichen der jeweiligen Anzahl von Winkelimpulsen feststellbar ist, wobei daran anschließend
g) eine Berechnungseinheit der Zündausgabeeinheit aktivierbar ist, die die für den Winkelrest benötigte Zeit unter Berücksichtigung der aktuellen Drehzahl ermittelt, wobei daran anschließend mittels der Vergleichseinheit der Ablauf der für den Winkelrest benötigten Zeit feststellbar ist und der Beginn der Ladezeit der Zündspule auslösbar ist.

**10.** Vorrichtung nach Anspruch 9, **dadurch gekennzeichnet, dass** die Zündausgabeeinheit neben dem Schließbeginnwinkel mindestens eine weitere, den Zündwinkel bestimmende Größe ($t_L$, $w_Z$) berechnet.

**11.** Vorrichtung nach Anspruch 10, **dadurch gekennzeichnet, dass** mittels der Zündausgabeeinheit in einem zweiten Modus als weitere, den Zündwinkel bestimmende Größe der Zündwinkel ($w_Z$) berechenbar ist, wobei mittels der ersten Mittel der Zündausgabeeinheit der Zündwinkel ($w_Z$) als Summe einer Anzahl von Winkelimpulsen und einem Winkelrest ermittelbar ist, wobei mittels der Vergleichseinheit, das Erreichen der jeweiligen Anzahl von Winkelimpulsen feststellbar ist, wobei daran anschließend die Berechnungseinheit der Zündausgabeeinheit aktivierbar ist, die die für den Winkelrest benötigte Zeit unter Berücksichtigung der aktuellen Drehzahl ermittelt, wobei daran anschließend mittels der Vergleichseinheit der Ablauf der für den Winkelrest benötigten Zeit feststellbar ist und das Ende der Ladezeit der Zündspule auslösbar ist.

**12.** Vorrichtung nach Anspruch 10, **dadurch gekennzeichnet, dass** mittels der Zündausgabeeinheit in einem ersten Modus als weitere, den Zundwinkel bestimmende Große die Schließzeit ($t_L$) berechenbar ist, wobei mittels der Vergleichseinheit nach Ablauf der Schließzeit ($t_L$) das Ende der Ladezeit der Zündspule auslösbar ist.

**13.** Vorrichtung nach Anspruch 11 und 12, **dadurch gekennzeichnet, dass** die Zündausgabeeinheit abhängig von einem Betriebsparameter wie Drehzahl oder Zeit nach dem Start der Brennkraftmaschine zwischen dem ersten und dem zweiten Modus hin- und herschaltbar ist.

**14.** Vorrichtung nach einem der Ansprüche 9, 11 oder 12, **dadurch gekennzeichnet, dass** ein unabhangiger Taktgeber vorgesehen ist, der unabhängig von der Bewegung der Kurbelwelle arbeitet, wobei die Zundausgabeeinheit zweite Mittel vorsieht, die den Winkelrest oder die Schließzeit als Anzahl von Taktimpulsen des unabhängigen Taktgebers ausdrücken, wobei die Taktimpulse des Taktgebers an die Vergleichseinheit weiterleitbar sind.

**15.** Vorrichtung nach einem der Ansprüche 11 oder 12, **dadurch gekennzeichnet, dass** eine erste Leitung und eine zweite Leitung jeweils die Vergleichseinheit und die Zündausgabeeinheit verbinden, wobei ein Signal, dass von der Vergleichseinheit zum Beginn der Ladezeit der Zündspule erzeugbar ist, über die erste Leitung an die Ausgabeeinheit gebbar ist, und ein Signal, dass von der Vergleichseinheit zum Ende der Ladezeit der Zundspule erzeugbar ist, über die zweite Leitung an die Zündausgabeeinheit gebbar ist.

16. Vorrichtung nach Anspruch 9, **dadurch gekennzeichnet, dass** die Berechnung des Schließbeginnwinkel ($w_{LB}$) erst freigebbar ist, wenn eine Einspritzung erfolgt ist.

**Claims**

1. Method for operating an internal combustion engine, wherein:

   a) an angle encoder wheel generates angle pulses in synchronism with the movement of the crankshaft,
   b) an ignition output unit calculates at least one start-of-closing angle ($w_{LB}$) in each segment of an internal combustion engine cycle, the start-of-closing angle ($w_{LB}$) being determined as the sum of a number of angle pulses and an angle remainder,
   c) the point when the respective number of angle pulses is reached is determined by means of a comparison unit, and the time required for the angle remainder is subsequently determined taking into account the current rotational speed, and the start of the charge time of the ignition coil is triggered after the time required for the angle remainder has subsequently expired.

2. Method according to Claim 1, **characterized in that**, in addition to the start-of-closing angle, the ignition output unit calculates at least one further variable ($t_L$, $w_Z$) which determines the ignition angle.

3. Method according to Claim 2, **characterized in that**, in a second mode, the ignition output unit calculates the ignition angle ($w_Z$) as a further variable which determines the ignition angle, the ignition angle ($w_Z$) being calculated as the sum of a number of angle pulses and an angle remainder by means of the first means of the ignition output unit, and the point when the respective number of angle pulses is reached is determined by means of a comparison unit, and the time required for the angle remainder is subsequently determined taking into account the current rotational speed, and the end of the charge time of the ignition coil is triggered after the time required for the angle remainder has subsequently expired.

4. Method according to Claim 2, **characterized in that**, in a first mode, the ignition output unit calculates the closing time ($t_L$) as a further variable which determines the ignition angle, the end of the charge time of the ignition coil being triggered by means of the comparison unit after the closing time ($t_L$) has expired.

5. Method according to Claim 3 and 4, **characterized in that** the ignition output unit switches back and forth between the first and second modes as a function of an operating parameter such as rotational speed or time after the internal combustion engine has started.

6. Method according to one of Claims 1, 3 or 4, **characterized in that** the angle remainder or the closing time is expressed as a number of clock pulses of an independent clock signal transmitter by means of second means of the ignition output unit, the independent clock signal transmitter operating independently of the movement of the crankshaft, and the clock pulses of the clock signal transmitter being passed on to the comparison unit.

7. Method according to one of Claims 3 or 4, **characterized in that** a signal which is generated by the comparison unit at the start of the charge time of the ignition coil is transmitted to the output unit via a first line, and a signal which is generated by the comparison unit at the end of the charge time of the ignition coil is transmitted to the ignition output unit via a second line, the first line and the second line respectively connecting the comparison unit and the ignition output unit.

8. Method according to Claim 1, **characterized in that** the calculation of the start-of-closing angle ($w_{LB}$) is not enabled until an injection has taken place.

9. Device for operating an internal combustion engine having:

   d) an angle encoder wheel which generates angle pulses in synchronism with the movement of the crankshaft,
   e) an ignition output unit which calculates at least one start-of-closing angle ($w_{LB}$) in each segment of an internal combustion engine cycle, first means of the ignition output unit being provided which determine the start-of-closing angle (w$_{LB}$) as the sum of a number of angle pulses and an angle remainder,

f) a comparison unit by means of which the point when the respective number of angle pulses is reached can be determined, subsequent to which

g) it is possible to activate a calculation unit of the ignition output unit which determines the time required for the angle remainder taking into account the current rotational speed, subsequent to which it is possible, by means of the comparison unit, to determine the expiry of the time required for the angle remainder and to trigger the start of the charge time of the ignition coil.

10. Device according to Claim 9, **characterized in that**, in addition to the start-of-closing angle, the ignition output unit calculates at least one further variable (t$_L$, w$_Z$) which determines the ignition angle.

11. Device according to Claim 10, **characterized in that**, in a second mode, it is possible, by means of the ignition output unit, to calculate the ignition angle (w$_Z$) as a further variable which determines the ignition angle, it being possible, by means of the first means of the ignition output unit, to determine the ignition angle (w$_Z$) as the sum of a number of angle pulses and an angle remainder, it being possible, by means of the comparison unit, to determine the point when the respective number of angle pulses is reached, subsequent to which it is possible to activate the calculation unit of the ignition output unit which determines the time required for the angle remainder taking into account the current rotational speed, subsequent to which it is possible, by means of the comparison unit, to determine the expiry of the time required for the angle remainder and to trigger the end of the charge time of the ignition coil.

12. Device according to Claim 10, **characterized in that**, in a first mode, it is possible, by means of the ignition output unit, to calculate the closing time (t$_L$) as a further variable which determines the ignition angle, it being possible, by means of the comparison unit, to trigger the end of the charge time of the ignition coil after the closing time (t$_L$) has expired.

13. Device according to Claim 11 and 12, **characterized in that** the ignition output unit can be switched back and forth between the first and second modes as a function of an operating parameter such as rotational speed or time after the internal combustion engine has started.

14. Device according to one of Claims 9, 11 or 12, **characterized in that** an independent clock signal transmitter is provided which operates independently of the movement of the crankshaft, the ignition output unit providing a second means which express the angle remainder or the closing time as a number of clock pulses of the independent clock signal transmitter, it being possible for the clock pulses of the clock signal transmitter to be passed on to the comparison unit.

15. Device according to one of Claims 11 or 12, **characterized in that** a first line and a second line respectively connect the comparison unit and the ignition output unit, a signal which can be generated by the comparison unit at the start of the charge time of the ignition coil being capable of being transmitted to the output unit via the first line, and a signal which can be generated by the comparison unit at the end of the charge time of the ignition coil being capable of being transmitted to the ignition output unit via the second line.

16. Device according to Claim 9, **characterized in that** the calculation of the start-of-closing angle (w$_{LB}$) cannot be enabled until an injection has taken place.

**Revendications**

1. Procédé de gestion d'un moteur à combustion selon lequel :

a) une roue phonique génère des impulsions angulaires en synchronisme avec le mouvement du vilebrequin,

b) une unité de commande d'allumage calcule dans chaque segment d'un cycle de moteur à combustion, au moins un angle de début de fermeture (w$_{LB}$), cet angle étant la somme d'un nombre d'impulsions angulaires et d'un résidu angulaire,

c) à l'aide d'une unité de comparaison on constate que l'on a atteint le nombre respectif d'impulsions angulaires et ensuite on détermine le temps nécessaire au résidu angulaire en tenant compte de la vitesse de rotation actuelle, et à la fin d'une durée consécutive on déclenche le début du temps de charge de la bobine d'allumage nécessaire au résidu angulaire.

**2.** Procédé selon la revendication 1,
**caractérisé en ce que**
l'unité de commande d'allumage calcule en plus de l'angle de début de fermeture au moins une autre grandeur ($t_L$, wz) qui définit l'angle d'allumage.

**3.** Procédé selon la revendication 2,
**caractérisé en ce que**
dans un second mode, l'unité de commande d'allumage calcule l'angle d'allumage (wz) comme autre grandeur définissant l'angle d'allumage,
et à l'aide des premiers moyens de l'unité de commande d'allumage on calcule l'angle d'allumage (wz) comme somme du nombre d'impulsions angulaires et d'un résidu angulaire, on détermine que l'on a atteint le nombre respectif d'impulsions angulaires à l'aide d'une unité de comparaison et ensuite on détermine le temps nécessaire pour le résidu angulaire en tenant compte de la vitesse de rotation actuelle, et à la fin du temps nécessaire pour arriver ensuite au résidu angulaire, on déclenche la fin du temps de charge de la bobine d'allumage.

**4.** Procédé selon la revendication 2,
**caractérisé en ce que**
dans un premier mode, l'unité de commande d'allumage calcule le temps de fermeture ($t_L$) comme autre grandeur définissant l'angle d'allumage,
et à l'aide de l'unité de comparaison, à la fin du temps de fermeture ($t_L$), on déclenche la fin du temps de charge de la bobine d'allumage.

**5.** Procédé selon les revendications 3 et 4,
**caractérisé en ce qu'**
en fonction d'un paramètre de fonctionnement tel que la vitesse de rotation ou le temps écoulé depuis le démarrage du moteur à combustion, l'unité de commande d'allumage commute alternativement entre un premier et un second mode.

**6.** Procédé selon l'une des revendications 1, 3 ou 4,
**caractérisé en ce qu'**
à l'aide de seconds moyens de l'unité de commande d'allumage on exprime le résidu angulaire ou le temps de fermeture comme nombre d'impulsions de cadence d'un générateur de cadence indépendant,
ce générateur de temps indépendant fonctionnant indépendamment du mouvement du vilebrequin,
les impulsions de cadence du générateur de temps étant transmises à l'unité de comparaison.

**7.** Procédé selon l'une des revendications 3 ou 4,
**caractérisé en ce qu'**
on génère un signal par l'unité de comparaison au début du temps de charge de la bobine d'allumage que l'on transmet par une première ligne à l'unité de commande d'allumage et
on génère un signal par l'unité de comparaison à la fin du temps de charge de la bobine d'allumage que l'on transmet à l'unité de commande d'allumage par une seconde ligne,
la première ligne et la seconde ligne reliant chaque fois l'unité de comparaison et l'unité de commande d'allumage.

**8.** Procédé selon la revendication 1,
**caractérisé en ce que**
le calcul de l'angle de début de fermeture ($w_{LB}$) est seulement libéré lorsqu'il y a une injection.

**9.** Dispositif de gestion d'un moteur à combustion comportant :

d) une roue phonique qui génère des impulsions d'angle en synchronisme avec le mouvement du vilebrequin,
e) une unité de commande d'allumage calcule au moins un angle de début de fermeture ($w_{LB}$) dans au moins chaque segment d'un cycle du moteur à combustion, des premiers moyens de l'unité de commande d'allumage étant prévus pour déterminer l'angle de début de fermeture ($w_{LB}$) comme somme d'un nombre d'impulsions angulaires et d'un résidu angulaire,
f) une unité de comparaison détermine que l'on atteint le nombre respectif d'impulsions angulaires et ensuite
g) une unité de calcul de l'unité de commande d'allumage est activée pour déterminer le temps nécessaire pour le résidu angulaire en tenant compte de la vitesse de rotation actuelle, et ensuite à l'aide de l'unité de comparaison on détermine le déroulement du temps nécessaire au résidu angulaire et on déclenche le début du temps de charge de la bobine d'allumage.

**10.** Dispositif selon la revendication 9,
**caractérisé en ce que**
l'unité de commande d'allumage calcule une autre grandeur définissant l'angle d'allumage ($t_L$, wz) en plus de l'angle de début de fermeture.

**11.** Dispositif selon la revendication 10,
**caractérisé en ce qu'**
à l'aide de l'unité de commande d'allumage, dans un second mode, comme autre grandeur on calcule la grandeur de l'angle d'allumage (wz) définissant l'angle d'allumage,
à l'aide des premiers moyens de l'unité de commande d'allumage on détermine l'angle d'allumage (wz) comme somme d'un nombre d'impulsions angulaires et d'un résidu angulaire,
à l'aide de l'unité de comparaison on détermine que l'on atteint le nombre d'impulsions angulaires respectif,
et ensuite l'unité de calcul active l'unité de commande d'allumage qui détermine le temps nécessaire au résidu angulaire en tenant compte de la vitesse de rotation actuelle,
et ensuite à l'aide de l'unité de comparaison on détermine le déroulement du temps nécessaire au résidu angulaire et on déclenche la fin du temps de charge de la bobine d'allumage.

**12.** Dispositif selon la revendication 10,
**caractérisé en ce qu'**
à l'aide de l'unité de commande d'allumage, dans un second mode, comme autre grandeur on calcule le temps de fermeture ($t_L$) comme autre grandeur déterminant l'angle d'allumage et
à l'aide de l'unité de comparaison, à la fin du temps de fermeture ($t_L$) on déclenche la fin du temps de charge de la bobine d'allumage.

**13.** Dispositif selon les revendications 11 ou 12,
**caractérisé en ce que**
l'unité de commande d'allumage commute alternativement entre le premier et le second mode selon un paramètre de fonctionnement tel que la vitesse de rotation ou le temps écoulé depuis le démarrage du moteur à combustion.

**14.** Dispositif selon l'une des revendications 9, 11 ou 12,
**caractérisé en ce qu'**
un générateur de cadence (horloge) indépendant est prévu pour travailler indépendamment du mouvement du vilebrequin et l'unité de commande d'allumage prévoit des seconds moyens qui expriment le résidu angulaire et le temps de fermeture sous la forme d'un nombre d'impulsions de cadence du générateur de cadence indépendant, les impulsions de cadence du générateur de cadence étant transmises à l'unité de comparaison.

**15.** Dispositif selon l'une des revendications 11 ou 12,
**caractérisé en ce qu'**
une première ligne et une seconde ligne relient chaque fois l'unité de comparaison et l'unité de commande d'allumage, un signal généré par l'unité de comparaison au début du temps de charge de la bobine d'allumage étant fourni à l'unité de commande d'allumage par l'intermédiaire de la première ligne et un signal que l'unité de comparaison génère à la fin du temps de charge de la bobine d'allumage est transmis à l'unité de commande d'allumage par la seconde ligne.

**16.** Dispositif selon la revendication 9,
**caractérisé en ce que**
le calcul de l'angle de début de fermeture ($w_{LB}$) est seulement libéré une fois qu'il y a eu une injection.

# FIG. 1

```
            ┌──────────────┐
            │    START     │
            └──────┬───────┘
                   │
    ┌──────────────┤
    │       ┌──────▼───────┐
    │       │      SY       │────── S100
    │       └──────┬───────┘
    │              │
    │       ┌──────▼───────┐
    │       │      ZZ       │────── S200
    │       └──────┬───────┘
    │              │
    │  N       ◇───▼───◇
    ◄──────────  INJ=OK ?   ────── S300
               ◇───┬───◇
                   │ J
            ┌──────▼───────┐
            │      ZF       │────── S400
            └──────┬───────┘
                   │
                               S700
                             ┌──────────────┐
  S500 ──   ◇───▼───◇   N    │      Z2       │
           N<NØ ?   ─────────►              │
           ◇───┬───◇         └──────┬───────┘
               │ J                  ┊
        ┌──────▼───────┐            ▼
        │      Z1       │─ S600
        └──────┬───────┘
               ┊
               ▼
```

# FIG. 2

```
                    ┊
                    ▼
        ┌ ◄── N   ╱ ╲
        ┊        ╱ ZF? ╲────── S1000
        ┊        ╲     ╱
                  ╲   ╱
                    │ J
                    ▼
        ┌ ◄── N   ╱  ╲
        ┊        ╱ ZLS? ╲───── S1100
        ┊        ╲     ╱
                  ╲   ╱
                    │ J
                    ▼
        ┌──────────────────┐
        │       ZWZ        │────── S1200
        └──────────────────┘
                    ┊
                    ▼
```

# FIG. 4

```
                    ┊
                    ▼
        ┌ ◄── N   ╱ ╲
        ┊        ╱ ZF? ╲────── S2000
        ┊        ╲     ╱
                  ╲   ╱
                    │ J
                    ▼
        ┌──────────────────┐
        │     dt / dw      │────── S2100
        └──────────────────┘
                    ┊
                    ▼
```

## FIG. 3

°KW

540°

360°

180°

0°

t_SEG

$t_{L, WZ}$

N, B

N, B

# FIG. 5

# FIG. 6